# EUROPÄISCHE PATENTSCHRIFT

(11) **EP 1 699 941 B1**
(45) Veröffentlichungstag und Bekanntmachung des Hinweises auf die Patenterteilung: **09.07.2008**
(21) Anmeldenummer: 04764369.7
(22) Anmeldetag: 23.08.2004
(51) Int. Cl.: C21D 9/30, F16C 3/08

(54) **KURBELWELLE SOWIE VERFAHREN ZU IHRER HERSTELLUNG UND DEREN VERWENDUNG**
CRANKSHAFT COMPRISING A COMBINED GEAR WHEEL AND METHOD FOR THE PRODUCTION AND USE OF SAID CRANKSHAFT
VILEBREQUIN, SON PROCEDE DE PRODUCTION, ET SON UTILISATION

(30) Priorität: 23.09.2003 DE 10344073
(43) Veröffentlichungstag der Anmeldung: 13.09.2006
(73) Patentinhaber: Daimler AG, 70327 Stuttgart (DE)
(72) Erfinder: BEHR, Thomas, 89275 Elchingen (DE); ROHRBERG, Uwe, 71384 Weinstadt (DE); HAUG, Tilmann, 89264 Weissenhorn (DE)
(86) Internationale Anmeldenummer: PCT/EP2004/009387
(87) Internationale Veröffentlichungsnummer: WO 2005/035801

(56) Entgegenhaltungen:
- EP-A- 0 968 868
- WO-A-00/47362
- US-B1- 6 258 180
- PUTATUNDA S K: "Development of austempered ductile cast iron with simultaneous high yield strenght and fracture toughness by a novel two-step austempering process" MATERIALS SCIENCE AND ENGINEERING A: STRUCTURAL MATERIALS: PROPERTIES, MICROSTRUCTURE & PROCESSING, LAUSANNE, CH, Bd. A315, 30. September 2001 (2001-09-30), Seiten 70-80, XP002269143 ISSN: 0921-5093
- KOVACS SR B V: "DEVELOPMENT OF AUSTEMPERED DUCTILE IRON (ADI) FOR AUTOMOBILE CRANKSHAFTS" JOURNAL OF HEAT TREATING, SPRINGER VERLAG, NEW YORK, US, Bd. 5, Nr. 1, 1987, Seiten 55-60, XP000000319 ISSN: 0190-9177
- PATENT ABSTRACTS OF JAPAN Bd. 0082, Nr. 51 (C-252), 16. November 1984 (1984-11-16) & JP 59 129730 A (TOYOTA JIDOSHA KK), 26. Juli 1984 (1984-07-26)

## Beschreibung

Die Erfindung betrifft eine Kurbelwelle mit kombiniertem Antriebszahnrad sowie ein Verfahren zu ihrer Herstellung und deren Verwendung. Derartige Kurbelwellen sind bereits aus der DE19517506A1 sowie aus der WO 00/47362 A bekannt.

Motoren mit hohen leistungsdichten und Zünddrücken, zum Beispiel Dieselmotoren, benötigen Kurbelwellen mit kombiniertem Antriebszahnrad, die insbesondere in ihrem Verbindungsbereich hohen Belastungen gewachsen sind. Daher werden in der Regel geschmiedete Stahl-Kurbelwellen verwendet, an die gehärtete Zahnräder mittels Stoff- (Schweissen), Form- (Schrauben) oder Reibschlüssigen (Passungen) Verbindungsverfahren gefügt werden.

So wird beispielsweise gemäß der DE19517506A1 das Zahnrad an die Kurbelwelle angeschraubt.

Erhöhte Belastbarkeit von Kurbelwellen kann gemäß der JP59129730A auch durch Austempern der Welle und weitere Bearbeitungsschritte erzielt werden.

Die Zahl der Verfahrensschritte zur Herstellung einer Kurbelwelle mit kombiniertem Antriebszahnrad bedingt vergleichsweise lange Herstellungszeiten und verursacht entsprechend hohe Kosten.

Die Aufgabe der vorliegenden Erfindung besteht daher darin, ein Verfahren mit weniger Verfahrensschritten zur Herstellung einer Kurbelwelle mit kombiniertem Antriebszahnrad sowie die daraus resultierende Kurbelwelle anzugeben.

Die Erfindung ist in Bezug auf die zu schaffende Kurbelwelle durch die Merkmale des Patentanspruchs 1 wiedergegeben. Die Erfindung ist in Bezug auf das zu schaffende Verfahren durch die Merkmale des Patentanspruchs 2 wiedergegeben. Patentanspruch 4 gibt eine bevorzugte Verwendung an. Patentanspruch 3 enthält eine vorteilhafte Weiterbildung des erfindungsgemäßen Verfahrens.

Die Aufgabe wird durch eine Kurbelwelle mit kombiniertem Antriebszahnrad gemäß Anspruch 1 gelöst.

Der Vorteil dieser Ausgestaltung besteht in den niedrigeren Herstellungskosten infolge des Wegfalls des Fügeschritts sowie der im Vergleich zum Schmieden kurzen Gusszeit. Darüber hinaus besteht beim Gießen eine erhöhte Designfreiheit.

Die Kurbelwelle mit kombiniertem Antriebszahnrad besteht aus austempered ductile iron (ADI). Dabei handelt es sich um ein Gusseisen mit Kugelgraphit, das durch gezielte Wärmebehandlung (Austempern) u.a. verbesserte Verschleißeigenschafen aufweist.

Vorteilhaft ist hier einerseits das verringerte Gewicht - ADI hat ein um circa 10 Prozent geringeres Gewicht als der üblicherweise verwendete Stahl. Andererseits weist ADI hervorragende thermische und mechanische Kennwerte auf, insbesondere hohe Festigkeit bis zu 1600 N/mm².

Der Bereich des Zahnrades weist eine erhöhte Härte gegenüber dem restlichen Gußteil auf. Dies ist durch geeignete unterschiedlich gesteuerte Temperaturführung während der Wärmebehandlung der verschiedenen Gußteilbereiche erreichbar. Eine additive oder alternative Erhöhung der Härte ist durch eine Kaltverfestigung (sog. Festigkeitsstrahlen) möglich.

Eine weitere lokale Erhöhung der Härte der Zähne erfolgt dadurch, lokal Carbide in die Schmelze einzubringen. Dies erfolgt über carbidhaltige Schlichten. Man erhält eine ADI-Mikrostruktur mit zusätzlich eingebrachten Carbiden (sog. carbidic ADI = CADI). So gehärtete Bereiche weisen eine erhöhte Verschleißbeständigkeit auf.

Die Aufgabe wird bezüglich des zu schaffenden Verfahrens zur Herstellung einer Kurbelwelle erfindungsgemäß dadurch gelöst, dass die Kurbelwelle mit kombiniertem Antriebszahnrad gemäß Anspruch 2 hergestellt wird.

Zum Gießen werden Basislegierungen verwendet, die zum austempern geeignet sind. Dadurch kann die Kurbelwelle mit kombiniertem Antriebszahnrad zunächst formvollendet hergestellt werden und danach getempert (wärmebehandelt) werden, wobei sich die vorteilhaften mechanischen und thermischen Eigenschaften des ADI (austempered ductile iron) ausbilden. Alternativ kann die Wärmebehandlung auch direkt nach dem Gießen erfolgen und sich daran eine evtl. anwendungsspezifisch erforderliche Endbearbeitung anschließen.

Es erfolgt auch die Härtung der Zähne. Sie kann durch lokal unterschiedliche Steuerung der Wärmebehandlung und/oder lokale Kaltverfestigung, z.B. durch Festigkeitsstrahlen, und/oder lokales Einbringen carbidhaltiger Schlichten in die Gießform erfolgen.

Besonders vorteilhaft lässt sich das erfindungsgemäße Verfahren beim Kokillengießen (Dauerformen) einsetzen. Dbei lassen sich einerseits die Zahnradbereiche besonders formgenau giessen und andererseits ist bereits eine zumindest teilweise Wärmebehandlung in der Gussform möglich.

Besonders vorteilhaft ist die Verwendung einer erfindungsgemäßen Kurbelwelle mit kombiniertem Antriebszahnrad in einem Diesel-Kraftfahrzeug, da dessen Motoren besonders hohen Belastungen unterworfen sind.

Die erfindungsgemäße Kurbelwelle mit kombiniertem Antriebszahnrad erweist sich als besonders geeignet für die Anwendung in Automobilen. Sie kann aber auch in anderen Bereichen, in denen sie hohen Belastungen ausgesetzt ist, besonders vorteilhaft verwendet werden. Beispielhaft seien der Schiffs- und Flugzeugbau genannt, aber auch stationäre Anwendungen, z.B. Generatoren.

## Patentansprüche

1. Kurbelwelle mit kombiniertem Antriebszahnrad, beide in einem Stück gegossen,
wobei Kurbelwelle und Zahnrad unterschiedliche Härte aufweisen,
**dadurch gekennzeichnet,**
**dass** beide aus austempered ductile iron (ADI)bestehen, dass das Zahnrad eine erhöhte Härte durch unterschiedliche Temperaturführung während der ADI-Wärmebehandlung und/oder durch Festigkeitsstrahlen aufweist,
**dass** die Zähne des Zahnrades eine weiter erhöhte Härte durch Einbringen carbidhaltiger Schlichten (CADI) aufweisen.

2. Verfahren zur Herstellung einer Kurbelwelle mit kombiniertem Antriebszahnrad,
bei dem beide in einem Stück gegossen werden,
**dadurch gekennzeichnet,**
**dass** eine für austempered ductile iron (ADI) geeignete Basislegierung als Gussmaterial verwendet und wärmebehandelt wird, wobei die Wärmebehandlung derart lokal unterschiedlich gesteuert wird, dass eine erhöhte Härte des Zahnrades resultiert, und/oder
**dass** die Dauerfestigkeit des Zahnrades durch Festigkeitsstrahlen lokal erhöht wird
und **dass** durch Einbringen carbidhaltiger Schlichten die Härte der Zähne des Zahnrades weiter erhöht wird.

3. Verfahren nach Anspruch 2,
**dadurch gekennzeichnet,**
**dass** es beim Kokillengießen eingesetzt wird.

4. Verwendung einer Kurbelwelle nach Anspruch 1 für ein Diesel-Kraftfahrzeug.

## Claims

1. Crankshaft comprising a combined driving gearwheel,
both cast in one piece,
the crankshaft and gearwheel having a different hardness,
**characterized**
**in that** both are composed of austempered ductile iron (ADI),
**in that** the hardness of the gearwheel is increased as a result of different temperature control during the ADI heat treatment and/or as a result of peening,
and **in that** the hardness of the teeth of the gearwheel is increased further as a result of the introduction of carbide-containing coatings (CADI).

2. Method for producing a crankshaft comprising a combined driving gearwheel,
in which both are cast in one piece,
**characterized**
**in that** a base alloy which is suitable for austempered ductile iron (ADI) is used as the casting material and is heat-treated, the heat treatment being controlled in a locally differing manner such that the hardness of the gearwheel is increased, and/or
**in that** the fatigue strength of the gearwheel is locally increased as a result of peening,
and **in that** the hardness of the teeth of the gearwheel is further increased by the introduction of carbide-containing coatings.

3. Method according to Claim 2,
**characterized**
**in that** it is used for chill casting.

4. Use of a crankshaft according to Claim 1 for a diesel motor vehicle.

## Revendications

1. Vilebrequin comprenant une roue dentée d'entraînement combinée, tous deux étant coulés d'une seule pièce,
le vilebrequin et la roue dentée présentant des duretés différentes,
**caractérisé en ce que**
tous deux se composent de fonte ADI (austempered ductile iron), **en ce que** la roue dentée a une dureté accrue due à un apport de température différent pendant le traitement thermique ADI et/ou due à un grenaillage, **en ce que** les dents de la roue dentée présentent une dureté encore accrue du fait de l'introduction de revêtements contenant du carbure (CADI).

2. Procédé de fabrication d'un vilebrequin comprenant une roue dentée d'entraînement combinée,
dans lequel tous deux sont coulés d'une seule pièce,
**caractérisé en ce que**
l'on utilise un alliage de base approprié pour une fonte ADI (austempered ductile iron) en tant que matière de coulée et l'on effectue un traitement thermique, le traitement thermique étant commandé localement différemment de telle sorte qu'il en résulte une dureté accrue de la roue dentée, et/ou en ce que la résistance à la fatigue de la roue dentée est localement accrue par grenaillage,
et **en ce que** la dureté des dents est encore accrue par apport de revêtements contenant du carbure.

3. Procédé selon la revendication 2,
**caractérisé en ce**
**qu'**on l'utilise pour la coulée en coquilles.

4. Utilisation d'un vilebrequin selon la revendication 1 pour un véhicule automobile diesel.
